# EUROPÄISCHE PATENTSCHRIFT

(11) **EP 1 789 766 B1**
(45) Veröffentlichungstag und Bekanntmachung des Hinweises auf die Patenterteilung: **23.12.2015**
(21) Anmeldenummer: 05786869.7
(22) Anmeldetag: 31.08.2005
(51) Int. Cl.: G01L 19/10, G01L 19/12, G01L 7/08, G01L 9/00

(54) **ANZEIGEMITTEL FÜR DRUCKVERHÄLTNISSE**
DISPLAY MEANS FOR PRESSURE RATIOS
ORGANE D'AFFICHAGE DE RAPPORTS DE PRESSION

(30) Priorität: 02.09.2004 GB 0419490
(43) Veröffentlichungstag der Anmeldung: 30.05.2007
(73) Patentinhaber: BSH Hausgeräte GmbH, 81739 München (DE)
(72) Erfinder: NAYLOR, Simon James, Cambridge Cambridgeshire CB1 7SF (GB); SHIRGAONKAR, Sameer, London SW12 9NU (GB); NEAVE, James Beeching, London SE10 8JT (GB); WEBSTER, Craig Duncan, Cambridge Cambridgeshire CB4 9XL (GB)
(86) Internationale Anmeldenummer: PCT/EP2005/054285
(87) Internationale Veröffentlichungsnummer: WO 2006/024648

(56) Entgegenhaltungen:
- DE-A1- 2 062 340
- DE-A1- 3 412 972
- DE-A1- 10 248 510
- DE-C1- 3 731 648
- US-A- 2 381 582
- US-A- 4 283 706
- US-A- 5 255 670

## Beschreibung

Die vorliegende Erfindung betrifft ein Kühlgerät mit Mitteln zum Anzeigen eines Druckverhältnisses, insbesondere von zwei Zonen, jeweils bei Luftdruck und vermindertem Luftdruck.

Der Druck abgesaugter Fächer und anderer Räume wird gewöhnlich mittels geeigneter Messinstrumente mit unterschiedlichem Grad an Komplexheit gemessen und überwacht. In bestimmten Bereichen, zum Beispiel bei der Serienherstellung von Haushaltsprodukten, ist es wünschenswert, eine ausreichend genaue Angabe des Vakuumniveaus verbunden mit baulicher Einfachheit und entsprechend niedrigen Kosten zu erzielen. Eine für diese Aufgabe besonders relevante Anwendung ist die der Haushaltskühlschränke mit einem Vakuumfach zum Lagern von Lebensmitteln unter Vakuumbedingungen, um verbesserte Sterilität und daher längere Lagerlebensdauer von Produkten bereitzustellen, die anderenfalls von Bakterien beeinträchtigt werden. Ein Kühlschrank mit absaugbaren Fächern und Drucksensoren zum Erfassen des Drucks in den Fächern ist aus DE 102 48 510 A1 bekannt. Um den Benutzer zu informieren, dass ein erwünschtes Unterdruckniveau in dem Fach erreicht wurde und danach aufrechterhalten wird, ist ein kostspieliges Vakuumanzeigegerät der herkömmlichen Art nicht erforderlich.

DE 2062340 A1 offenbart einen Thermoschrank, dessen Innenraum evakuierbar ist, um darin gelagerte warme oder kalte Gegenstände zu isolieren. Über einer Wandöffnung des Thermoschranks ist eine Membran montiert, und ein Stößel erstreckt sich von der Membran durch die Wandöffnung zu einem Mikroschalter, um entsprechend der Stellung der Membran den Betrieb einer Vakuumpumpe zu steuern.

Es ist daher die Aufgabe der vorliegenden Erfindung, Kühlgerät bereitzustellen, bei dem ein Druckverhältnis zwischen einer Zone unter Luftdruck und einem absaugbaren Lagerfach mit relativ einfachem und wirtschaftlichem Aufbau anzeigbar ist.

Die Aufgabe wird gelöst durch ein Kühlgerät mit den Merkmalen des Anspruchs 1.

Das Anzeigemittel des erfindungsgemäßen Kühlgeräts stellt ein einfaches und kostengünstiges Mittel zum Erzielen einer Anzeige eines Vakuumniveaus in dem absaugbaren Lagenfach durch den Einsatz einer Verdrängungskraft dar, die von dem Vakuum selbst erzeugt wird, und auf ein Element, das in die Grenzwand zwischen der Zone und dem absaugbaren Lagerfach eingebaut ist, einwirkt. Das Vakuumniveau kann durch einen Blick auf das Element oder auf eine dazugehörende Anzeige beurteilt werden, so dass es zum Beispiel für den Benutzer des Kühlgeräts augenblicklich möglich ist sicherzustellen, ob ein effektiver verminderter Luftdruck erreicht wurde oder nicht oder aufrechterhalten wird. Die Zone ist dabei ein weiteres Lagerfach, zum Beispiel ein Fach zum Lagern bei Luftdruck. Die Grenzwand ist in diesem Fall eine wand, die die zwei Fächer trennt.

Bei einer bevorzugten Ausführungsform ist das Element so eingerichtet, dass es nur in die zweite Stellung ablenkbar ist, wenn der Druck in dem absaugbaren Lagerfach um einen vorausbestimmten Betrag niedriger ist als in der Zone, so dass die Ablenkung tatsächlich bei einem ausgewählten Druckschwellenwert ausgelöst wird. Eine solche Anordnung kann es zum Beispiel erlauben, unverzüglich zwischen einem verminderten Luftdruck, der noch über einem erwünschten Niveau liegt, das durch den Schwellenwert dargestellt wird, und einem verminderten Luftdruck auf oder unter dem erwünschten Niveau zu unterscheiden. Diese Unterscheidung wird unterstützt, wenn das Element in der ersten und der zweiten Stellung in einem unveränderten Zustand bleibt, also bistabil ist. Ferner kann das Element eingerichtet werden, um plötzlich von der ersten auf die zweite Stellung überzugehen, und das Anzeigemittel kann einen leicht hörbaren Ton abgeben, insbesondere ein scharfes Knallen oder einen ähnlichen Ton, um den Benutzer auf das Erstellen der erwünschten Vakuumbedingungen in dem absaugbaren Lagerfach aufmerksam zu machen.

Alternativ kann das Element durch Unterdruck in dem absaugbaren Lagerfach so ablenkbar sein, dass sich die zweite stellung allmählich mit der fortschreitenden Verringerung des Drucks in dem absaugbaren Lagerfach verändert. Die allmähliche Veränderung der zweiten Stellung des Elements erlaubt das Überwachen einer allmählichen Zunahme des verminderten Luftdrucks, sei es durch Inspektion öder durch ein abgeleitetes Signal oder eine Anzeige.

Vorzugsweise ist das Element eingerichtet, um in eine zweite Stellung gegen eine Spannung ablenkbar zu sein, die dazu tendiert, das Element in der ersten Stellung zu halten, in welchem Fall die Spannung zum Beispiel durch einen federnden Aufbau des Elements selbst oder durch federnde Mittel, wie zum Beispiel eine Spule, eine Blattfeder oder andere Art von Feder, die baulich von dem Element getrennt ist, bereitgestellt wird.

Die Ablenkfähigkeit des Elements kann zum Beispiel durch Verbinden des Elements mit einer Umgebungszone der Grenzwand durch eine biegsame Verbindung, die zum Beispiel aus einem äußeren ringförmigen Abschnitt des Elements bestehen kann, verwirklicht werden. Das Biegen des ringförmigen Abschnitts kann verstärkt werden, indem der Abschnitt wellenförmig ausgebildet wird, wodurch dem Element eine Dehnungs- und Zusammenziehfähigkeit verliehen wird. Das Element kann einen nicht biegsamen Mittenabschnitt innerhalb des ringförmigen Abschnitts haben, zum Beispiel einen biegsamen Mittenabschnitt, der seine Form zwischen der ersten und der zweiten Stellung ändern kann. In beiden Fällen kann der Mittenabschnitt konkav-konvexe Form haben. Die Form und die Einrichtung des Elements können so sein, dass es in die Zone vorragt, wenn es sich in der ersten Stellung befindet, und zusätzlich oder alternativ in das absaugbare Lagerfach, wenn es sich in der zweiten Stellung befindet.

Das Anzeigemittel kann besonders wirtschaftlich bereitgestellt werden, wenn das Element aus einem Stück mit der Grenzwand ausgebildet wird, wie zum Beispiel durch einen biegsamen Abschnitt dieser Wand ausgebildet ist. Das Element kann jedoch ebenso getrennt von und dichtend mit der Wand verbunden ausgebildet sein.

In seiner einfachsten Form ist das Element so eingerichtet, dass seine Stellungen beim Gebrauch durch Sichtprüfung von der Zone aus bestimmt werden können. In diesem Fall sollte das Element dem Blick von der Zone aus so ausgesetzt sein, dass seine erste und seine zweite Stellung sichtbar und voneinander leicht zu unterscheiden sind. Zusätzlich kann das Anzeigemittel eine Anzeige umfassen, die Anzeigen stellungsabhängig liefert. Die Anzeige kann sich dann in einer Entfernung von dem Element befinden und insbesondere in einer ausgewählten Stellung, die für das Betrachten geeignet ist. Die Anzeige kann mechanisch bedienbar sein, wie zum Beispiel durch eine direkte mechanische Kopplung zwischen dem Element und einem Bauteil der Anzeige oder alternativ elektrisch, optisch, magnetisch, elektromagnetisch oder optoelektronisch. Eine solche Anzeige kann betrieben werden, um eine visuelle Anzeige des Druckniveaus in dem Fach zu geben, zum Beispiel eine Darstellung des aktuellen Drucks oder vielleicht eine symbolische Darstellung des Erreichens eines vorausbestimmten Druckniveaus, wie zum Beispiel einen Wechsel in einer Farbanzeige. Das Anzeigemittel kann auch betrieben werden, um ein Steuersignal zum Steuern von Steuermitteln in Abhängigkeit von der Stellung des Elements bereitzustellen, so dass eine Steuerfunktion durch das Erreichen eines erwünschten Unterdruckniveaus in dem Fach ausgelöst werden kann.

Das Kühlgerät kann zum Beispiel ein Kühlschrank, eine Kombination Kühlschrank/Tiefkühler oder ein anderes derartiges Gerät sein, in dem ein Lagerfach bereitgestellt wird, um zum Beispiel Nahrungsmittel unter Vakuumbedingungen zu lagern.

Das Gerät kann ferner Steuermittel umfassen, die als Reaktion auf die Stellung des Elements des Anzeigemittels betrieben werden, wobei solche Steuermittel zum Beispiel eine Pumpe des Absaugmittels oder ein Türschloss für eine Tür des absaugbaren Lagerfachs umfassen. Das ablenkbare Element des Anzeigemittels kann daher zum Auslösen einer dazugehörenden Steuerfunktion als Reaktion auf das Einnehmen der zweiten Stellung durch das Element verwendet werden.

Ausführungsformen der vorliegenden Erfindung werden nun eingehender beispielhaft unter Bezugnahme auf die anliegenden Zeichnungen beschrieben, in welchen:
- Fig. 1: eine schematische perspektivische Ansicht eines Vakuumlagerfachs ist, das mit dem erfindungsgemäßen Anzeigemittel ausgestattet ist;
- Fig. 2A und 2B: schematische Querschnitte einer ersten Ausführungsform des Anzeigemittels sind, die jeweils zwei Zustände zeigen, die zwei verschiedene Druckverhältnisse anzeigen, und
- Fig. 3A und 3B: schematische Querschnitte einer zweiten Ausführungsform des Anzeigemittels sind, die wieder zwei Zustände zeigen, die zwei verschiedene Druckverhältnisse anzeigen.

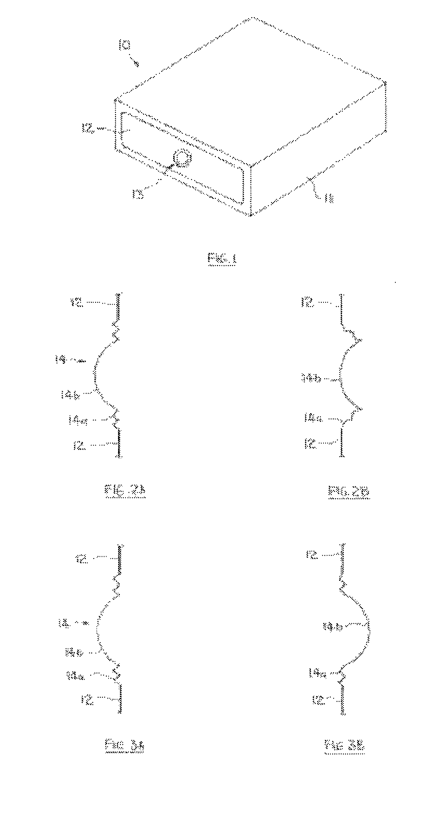

Unter Bezugnahme auf die Zeichnungen ist in Fig. 1 ein Vakuumlagerfach 10 einer Art gezeigt, die für den Gebrauch in einem Kühlschrank oder einem anderen Kühlgerät geeignet ist und zum Lagern von Nahrungsmitteln in einer Vakuumumgebung bestimmt ist. Das Lagern unter sauerstofffreien Bedingungen verlängert die Lagerzeit von Produkten, die anderenfalls allmählich aufgrund des Kontakts mit Sauerstoff verderben. Das Vakuumlagerfach, das einen gehäuseförmigen Körper 11 umfasst, der durch eine Tür 12 auf der Vorderseite des Geräts geschlossen werden kann, befindet sich in oder angrenzend zu einem weiteren Lagerfach (nicht dargestellt) mit normalem

## Patentansprüche

1. Kühlgerät, das ein absaugbares Lagerfach für das Lagern bei vermindertem Luftdruck, Mittel zum Absaugen des Fachs und Anzeigemittel zum Anzeigen eines Druckverhältnisses zwischen einer Zone unter Luftdruck und dem Fach, das von der Zone durch eine Grenzwand getrennt ist, umfasst, wobei das Anzeigemittel ein Element umfasst, das in die Grenzwand eingebaut und eingerichtet ist, um bei Unterdruck in dem Fach von einer ersten Stellung, die im Wesentlichen gleichwertige Drücke in der Zone und dem Fach anzeigt, zu einer zweiten Stellung, die in dem Fach einen Druck anzeigt, der geringer ist als in der Zone, abgelenkt zu werden, **dadurch gekennzeichnet, dass** die Zone ein weiteres Lagerfach ist und dass die Stellungen des Elements beim Gebrauch durch Sichtprüfung von der Zone aus bestimmbar sind.

2. Kühlgerät nach Anspruch 1, wobei das Element so angeordnet, dass es nur in die zweite Stellung ablenkbar ist, wenn der Druck in dem Fach um einen vorausbestimmten Betrag niedriger ist als in der Zone.

3. Kühlgerät nach Anspruch 2, wobei das Anzeigemittel beim Ablenken des Elements von der ersten zu der zweiten Stellung einen hörbaren Ton abgibt.

4. Kühlgerät nach Anspruch 1, wobei das Element durch Unterdruck in dem Fach so ablenkbar ist, dass sich die zweite Stellung allmählich mit der fortschreitenden Verringerung des Drucks in dem Fach verändert.

5. Kühlgerät nach einem der vorhergehenden Ansprüche, bei dem das Element eingerichtet ist, um gegen eine Spannung, die dazu tendiert, das Element in der ersten Stellung zu halten, in die zweite Stellung ablenkbar zu sein.

6. Kühlgerät nach Anspruch 5, bei dem die Spannung durch einen federnden Aufbau des Elements bereitgestellt wird.

7. Kühlgerät nach Anspruch 5, bei dem die Spannung durch ein federndes Mittel, das baulich von dem Element getrennt ist, bereitgestellt wird.

8. Kühlgerät nach einem der vorhergehenden Ansprüche, bei dem das Element mit einer Umgebungszone der Grenzwand durch eine biegsame Verbindung verbunden ist.

9. Kühlgerät nach Anspruch 8, bei dem die biegsame Verbindung durch einen äußeren ringförmigen Abschnitt des Elements bereitgestellt wird.

10. Kühlgerät nach Anspruch 9, bei dem der ringförmige Abschnitt wellig ausgebildet ist.

11. Kühlgerät nach Anspruch 9 oder 10, bei dem das Element einen nicht biegsamen Mittenabschnitt innerhalb des ringförmigen Abschnitts hat.

12. Kühlgerät nach Anspruch 9 oder 10, bei dem das Element einen biegsamen Mittenabschnitt innerhalb des ringförmigen Abschnitts hat, wobei die Form des Mittenabschnitts in der ersten Stellung des Elements anders ist als in der zweiten Stellung des Elements.

13. Kühlgerät nach Anspruch 11 oder 12, bei dem der Mittenabschnitt eine konkav-konvexe Form hat.

14. Kühlgerät nach einem der vorhergehenden Ansprüche, bei dem das Element in die Zone vorragt, wenn es sich in der ersten Stellung befindet.

15. Kühlgerät nach einem der vorhergehenden Ansprüche, bei dem das Element in das absaugbare Lagerfach vorragt, wenn es sich in der zweiten Stellung befindet.

16. Kühlgerät nach einem der vorhergehenden Ansprüche, bei dem das Element aus einem Stück mit der Grenzwand ausgebildet ist.

17. Kühlgerät nach einem der vorhergehenden Ansprüche 1 bis 15, bei dem das Element getrennt von und dichtend mit der Grenzwand ausgebildet ist.

18. Kühlgerät nach einem der vorhergehenden Ansprüche, das ferner Steuermittel umfasst, die als Reaktion auf die Stellung des Elements des Anzeigemittels betätigt werden können.

19. Kühlgerät nach Anspruch 18, bei dem das Steuermittel eine Pumpe des Absaugmittels umfasst.

20. Kühlgerät nach Anspruch 18 oder 19, bei dem das Steuermittel eine Türverriegelung für eine Tür des absaugbaren Lagerfachs umfasst.

## Claims

1. Refrigeration appliance comprising a removable storage compartment for storage purposes at reduced air pressure, means for removing the compartment and display means for displaying a pressure ratio between a zone at atmospheric pressure and the compartment which is separated from the zone by a boundary wall, wherein the display means comprises an element which is integrated into the boundary wall and set up, in the event of low pressure in the compartment, to be deflected from a first position, which essentially indicates comparable pressures in the zone and the compartment, to a second position, which indicates a pressure in the compartment which is lower than in the zone, **characterised in that** the zone is a further storage compartment and the positions of the element during use can be determined by visual examination from the zone.

2. Refrigeration appliance according to claim 1, wherein the element is arranged such that it can only be deflected in the second position if the pressure in the compartment is lower than in the zone by a predetermined amount.

3. Refrigeration appliance according to claim 2, wherein when the element is defected from the first to the second position, the display means outputs an audible sound.

4. Refrigeration appliance according to claim 1, wherein the element can be deflected by low pressure in the compartment such that the second position gradually changes with the progressive reduction in the pressure in the compartment.

5. Refrigeration appliance according to one of the preceding claims, in which the element is configured to be deflectable into the second position contrary to a voltage which tends to keep the element in the first position.

6. Refrigeration appliance according to claim 5, in which the voltage is provided by means of a spring-loaded design of the element.

7. Refrigeration appliance according to claim 5, in which the voltage is provided by a spring-loaded means, which is structurally separated from the element.

8. Refrigeration appliance according to one of the preceding claims, in which the element is connected to a surrounding area of the boundary wall by means of a flexible connection.

9. Refrigeration appliance according to claim 8, in which the flexible connection is provided by an outer annular section of the element.

10. Refrigeration appliance according to claim 9, in which the annular section is embodied with waves.

11. Refrigeration appliance according to claim 9 or 10, in which the element has a non-flexible central section within the annular section.

12. Refrigeration appliance according to claim 9 or 10, in which the element has a flexible central section within the annular section, wherein the shape of the central section in the first position of the element differs from that in the second position of the element.

13. Refrigeration appliance according to claim 11 or 12, in which the central section has a concave-convex shape.

14. Refrigeration appliance according to one of the preceding claims, in which the element protrudes into the zone if it is in the first position.

15. Refrigeration appliance according to one of the preceding claims, in which the element protrudes into the extractable storage compartment, if it is in the second position.

16. Refrigeration appliance according to one of the preceding claims, in which the element is embodied in one piece with the boundary wall.

17. Refrigeration appliance according to one of the preceding claims 1 to 15, in which the element is embodied separately from and in sealed manner with the boundary wall.

18. Refrigeration appliance according to one of the preceding claims, which also comprises control means, which can be actuated as a response to the position of the element of the display means.

19. Refrigeration appliance according to claim 18, in which the control means comprises a pump of the suction means.

20. Refrigeration appliance according to claim 18 or 19, in which the control means comprises a door lock for a door of the removable storage compartment.

## Revendications

1. Appareil frigorifique comprenant un compartiment de stockage susceptible d'être aspiré pour le stockage à une pression d'air moindre, un moyen d'aspiration du compartiment et un moyen d'affichage pour afficher un rapport de pression entre une zone sous pression d'air et le compartiment séparé de la zone par une paroi de délimitation, dans lequel le moyen d'affichage englobe un élément intégré à la paroi de délimitation et aménagé afin d'être dévié vers une deuxième position affichant dans le compartiment une pression moindre que celle de la zone, en présence d'une dépression au sein du compartiment, au départ d'une première position affichant essentiellement des pressions identiques au sein de la zone et du compartiment, **caractérisé en ce que** la zone est un compartiment de stockage supplémentaire et **en ce que**, lors de l'utilisation, les positions de l'élément peuvent être déterminées par inspection visuelle au départ de la zone.

2. Appareil frigorifique selon la revendication 1, dans lequel l'élément est disposé de telle manière qu'il puisse uniquement être dévié vers la deuxième position lorsque la pression au sein du compartiment est inférieure d'une valeur déterminée au préalable à celle au sein de la zone.

3. Appareil frigorifique selon la revendication 2, dans lequel le moyen d'affichage émet un signal sonore audible lors de la déviation de l'élément de la première position vers la deuxième.

4. Appareil frigorifique selon la revendication 1, dans lequel l'élément peut être dévié en présence d'une dépression au sein du compartiment de telle manière que la deuxième position varie progressivement en fonction de la réduction de la pression au sein du compartiment.

5. Appareil frigorifique selon l'une des revendications précédentes, dans lequel l'élément est aménagé afin de pouvoir être dévié vers la deuxième position contre une tension qui tend à maintenir l'élément dans la première position.

6. Appareil frigorifique selon la revendication 5, dans lequel la tension est fournie par une structure élastique de l'élément.

7. Appareil frigorifique selon la revendication 5, dans lequel la tension est fournie par un moyen élastique distinct de l'élément.

8. Appareil frigorifique selon l'une des revendications précédentes, dans lequel l'élément est relié à une zone environnante de la paroi de délimitation via une liaison flexible.

9. Appareil frigorifique selon la revendication 8, dans lequel la liaison flexible est fournie par section annulaire externe de l'élément.

10. Appareil frigorifique selon la revendication 9, dans lequel la section annulaire est exécutée de manière ondulée.

11. Appareil frigorifique selon la revendication 9 ou 10 dans lequel l'élément possède une section centrale inflexible au sein de la section annulaire.

12. Appareil frigorifique selon la revendication 9 ou 10, dans lequel l'élément possède une section centrale flexible au sein de la section annulaire, dans lequel la forme de la section centrale dans la première position de l'élément diffère de celle dans la deuxième position.

13. Appareil frigorifique selon la revendication 11 ou 12, dans lequel la section centrale possède une forme concave-convexe.

14. Appareil frigorifique selon l'une des revendications précédentes, dans lequel l'élément fait saillie dans la zone lorsqu'il se trouve en première position.

15. Appareil frigorifique selon l'une des revendications précédentes, dans lequel l'élément fait saillie dans le compartiment de stockage susceptible d'être aspiré lorsqu'il se trouve en deuxième position.

16. Appareil frigorifique selon l'une des revendications précédentes, dans lequel l'élément est exécuté d'une seule pièce avec la paroi de délimitation.

17. Appareil frigorifique selon l'une des revendications précédentes 1 à 15, dans lequel l'élément est exécuté de manière distincte par rapport à la paroi de délimitation et étanche avec celle-ci.

18. Appareil frigorifique selon l'une des revendications précédentes comprenant en outre des moyens de commande susceptibles d'être actionnés en réaction à la position de l'élément du moyen d'affichage.

19. Appareil frigorifique selon la revendication 18, dans lequel le moyen de commande comprend une pompe du moyen d'aspiration.

20. Appareil frigorifique selon la revendication 18 ou 19, dans lequel le moyen de commande comprend un verrouillage de porte pour une porte du compartiment de stockage susceptible d'être aspiré.
